# FASCICULE DE BREVET EUROPEEN

(11) **EP 3 325 299 B1**
(45) Date de publication et mention de la délivrance du brevet: **11.09.2019**
(21) Numéro de dépôt: 16739219.0
(22) Date de dépôt: 15.06.2016
(51) Int. Cl.: B60K 5/12, F16F 1/38

(54) **DISPOSITIF DE PIVOT**
SCHWENKBARE VORRICHTUNG
PIVOT DEVICE

(30) Priorité: 24.07.2015 FR 1557045
(43) Date de publication de la demande: 30.05.2018
(73) Titulaire: PSA AUTOMOBILES S.A., 78300 Poissy (FR)
(72) Inventeur: LAMBERT, Samuel, 25200 Montbeliard (FR)
(86) Numéro de dépôt international: PCT/FR2016/051443
(87) Numéro de publication internationale: WO 2017/017320

(56) Documents cités:
- WO-A1-2009/011835
- JP-A- 2009 234 564
- US-A- 1 717 524

## Description

L'invention porte sur une liaison pivot intégrée dans un système de suspension, ainsi qu'un véhicule, notamment automobile, pourvu d'au moins une telle liaison pivot.

Ces liaisons pivot sont bien connues dans les systèmes de suspension des moteurs dits groupes motopropulseurs (ci-après désignés par l'acronyme GMP par soucis de concision), tout particulièrement, mais non exclusivement, en tant que liaison pivot entre le GMP et une biellette de reprise de couple, dite encore biellette anti-couple, elle-même reliée à une caisse par une deuxième liaison pivot. De tels systèmes de suspension sont également connus pour filtrer les vibrations du GMP par rapport à la caisse, tout en assurant une rupture programmée d'au moins un élément du système en cas de choc du véhicule contre un obstacle fixe ou mobile.

Selon l'enseignement du brevet JP2009234564, il est connu d'avoir un montage d'une biellette anti-couple de moteur avec une section localement faible, en liaison élastique avec un support par l'intermédiaire d'une vis, d'un élément absorbant, et d'un raidisseur solidaire du support. La vis traverse le raidisseur, la biellette et l'élément absorbant, et est vissée dans le support. Le raidisseur étant moins rigide que le support, le raidisseur se déforme en cas de choc, et une sollicitation en flexion de la biellette apparaît. Cela permet, au-delà d'une valeur seuil de la sollicitation en flexion, de provoquer une rupture de la biellette à un endroit de la section localement faible.

Le problème d'une telle conception est de nécessiter une section de la biellette localement faible ou section "fragilisée", la section fragilisée devant être spécifique à chaque biellette différente, et adaptée à chaque montage, nécessitant des longues mises au point. Ainsi, si l'on souhaite modifier la valeur seuil de la sollicitation en flexion, il faut reconcevoir la biellette.

Par ailleurs, la section fragilisée peut ne pas être compatible avec des contraintes de fonctionnement sous des fortes charges, comme un couple important du moteur ou un choc à une basse vitesse où, pour des raisons de réparabilité, on ne souhaite pas avoir à remplacer la biellette.

Un autre inconvénient réside dans la difficulté de conception du raidisseur, qui est une pièce rapportée sur le support, et dont la déformation sous contrainte doit être parfaitement maîtrisée et adaptée au seuil de rupture de la biellette.

Le but de l'invention est de remédier au problème précédent en proposant une conception améliorée de ce dispositif permettant de limiter la diversité des biellettes, notamment en standardisant la biellette.

Accessoirement, le but de l'invention est également de remédier aux inconvénients précités.

A cet effet, l'invention a pour objet un dispositif de pivot comprenant :
- un premier support solidaire d'une chape, ladite chape comprenant un bras dit fixe et un bras dit glissant,
- un deuxième support articulé autour d'une entretoise de serrage, cette entretoise présentant un trou débouchant entre une extrémité glissante en vis-à-vis du bras glissant, et une extrémité fixe de l'entretoise en vis-à-vis du bras fixe,
- une tige de pivot traversant les deux bras et l'entretoise de serrage par le trou débouchant avec notamment un jeu de montage, et venant serrer l'entretoise entre les deux bras et les deux extrémités.
ce dispositif étant tel qu'un espace est aménagé entre la tige de pivot et l'entretoise de serrage, cet espace débouchant uniquement dans l'extrémité glissante.

Le premier support et la chape sont solidaires, c'est-à-dire qu'une liaison mécanique entre les deux permet une transmission de contraintes mécaniques selon les six degrés de liberté.

Toutes les définitions ci-dessous s'appliquent à tout le présent texte.

On entend par liaison pivot ou pivot, une liaison à articulation qui nécessite un montage en chape.

On entend par chape, la définition classique d'un support en U dont chacun des deux bras forme une branche du U, les bras étant généralement parallèles entre eux et munis d'un trou de passage pour une vis, ou un boulon.

On entend par entretoise de serrage, un noyau ou insert ayant une liaison pivot par rapport au deuxième support, et qui est bloqué par serrage entre les deux bras.

En effet, cette entretoise présente ses extrémités généralement parallèles entre elles et de surface plane, ces deux surfaces étant mises en appui sur les deux bras par serrage. L'entretoise de serrage va donc éviter de déformer les bras lors du serrage et être bloquée par adhérence entre ses extrémités et les bras. Le serrage est réalisé par la tige de pivot qui traverse l'entretoise par le trou débouchant de l'entretoise.

On entend par tige de pivot, la vis ou le boulon ou tout arbre traversant l'entretoise et les deux bras, et qui serre les bras sur les surfaces des extrémités de l'entretoise.

On entend par axe de pivot, l'axe théorique autour duquel s'articule le dispositif de pivot.

On entend par plan médian de la chape, le plan orthogonal à l'axe de pivot, et passant par un point central entre les deux extrémités et sur l'axe de pivot.

On entend par répartition de charge, le ratio entre les deux forces de réaction de chacun des bras, les deux forces de réaction équilibrant la force du deuxième support sur le premier support.

On entend par jeu de montage, un jeu nécessaire pour faciliter le passage de la tige de pivot dans le trou débouchant de l'entretoise tout en assurant une fonction de guidage de la tige de pivot dans l'entretoise. Sans espace aménagé, ce jeu est sur toute une longueur du trou débouchant.

On entend par jeu, un jeu généralement inférieur ou égal à 1 mm.

L'espace aménagé peut être réalisé dans l'entretoise, dans la tige de pivot, ou de façon répartie entre l'entretoise et la tige de pivot.

L'espace aménagé peut être obtenu par un enlèvement de matière de l'entretoise et/ou de la tige de pivot dans le cas d'un usinage, ou comme une surépaisseur ou une protubérance sur un moule et/ou noyau de moulage. Cet espace vient localement s'additionner au jeu de montage pour créer une dissymétrie selon le plan médian de la chape, cette dissymétrie étant obtenue en faisant déboucher cet espace uniquement dans l'extrémité glissante. Ainsi, l'extrémité fixe « voit » le jeu de montage, alors que l'extrémité glissante « voit » l'espace additionné au jeu.

De cette manière, lorsqu'il y a une rupture de l'adhérence consécutivement à une force anormale du deuxième support sur le premier support, par exemple lors d'un choc, l'extrémité fixe va venir transmettre cette force sur le bras fixe, car l'extrémité fixe est en butée sur la tige de pivot, alors que l'extrémité glissante ne sera pas retenue grâce à la présence de l'espace. Les bras étant dimensionnés pour supporter chacun une partie de la force, et selon une répartition de charge donnée entre les deux bras, l'un des deux bras va se rompre sans que l'on ait eu besoin de fragiliser la chape, le premier support ou le deuxième support. En effet, toujours en cas de rupture de l'adhérence, la répartition de charge va être modifiée. Ainsi, la dissymétrie selon le plan médian de la chape engendre une modification de la répartition de charge des bras, uniquement après la rupture d'adhérence provoquée par la force anormale.

De préférence, ce dispositif est tel que le deuxième support exerce une force donnée sur l'entretoise, et l'espace est d'une section constante ou continument croissante pour atteindre une section maximale dans le plan de l'extrémité glissante, et tel que la forme de la section maximale préserve un débattement entre l'extrémité glissante et la tige de pivot, dans le sens de la force, le débattement étant d'une valeur égale ou supérieure à 10 fois celle dudit jeu de montage, notamment 20 fois ledit jeu de montage.

On entend par section de l'espace, une surface traversant l'espace selon un plan de coupe orthogonale à la tige de pivot.

On entend par section constante ou continument croissante, le fait que la section de l'espace n'est jamais décroissante lorsque l'on déplace le plan de coupe de l'extrémité fixe vers l'extrémité glissante.

On entend par débattement, la longueur du déplacement possible de l'extrémité glissante d'une position initiale correspondant à une position de montage après le serrage, à une position en butée sur la tige de pivot.

En effet, l'extrémité glissante, l'entretoise, le trou débouchant et l'extrémité fixe forment un ensemble rigide. Pour faciliter le déplacement de l'extrémité glissante, après rupture de l'adhérence, il est préférable que l'espace libère l'entretoise de tout obstacle provenant de la tige de pivot ou de l'entretoise elle-même, permettant ainsi le débattement dans le sens d'application de la force. Bien entendu, s'il n'y a pas de sens particulier d'application, l'espace est symétrique selon l'axe de pivot. La section de l'espace constante ou continument croissante permet de créer un déversement ou rotulage de l'entretoise, déversement dont le centre est localisé à proximité d'une intersection de la tige de pivot avec l'extrémité fixe, tout en libérant tout obstacle au débattement. De cette façon, l'extrémité glissante, sous l'effet de la force anormale, peut se déplacer sur tout le débattement, alors que l'extrémité fixe reste en butée sur la tige de pivot, et ceci bien que l'entretoise soit rigide.

Pour ne pas affaiblir la tenue mécanique de la tige de pivot, ni de l'entretoise, et/ou pour ne pas provoquer des phénomènes de matage des bras et/ou de l'entretoise lors du serrage, il est préférable que le débattement ne soit pas trop grand. Pour avoir un effet de rupture de la chape, il est préférable que le débattement ne soit pas trop petit et proportionnel au jeu de montage. Cette proportionnalité permet de concevoir ce dispositif pour plusieurs domaines d'application nécessitant des dimensionnements différents. De préférence, on a donc sélectionné le débattement d'une valeur égale ou supérieure à 10 fois celle dudit jeu de montage, notamment 20 fois ledit jeu de montage.

De préférence, pour une application dans le domaine des véhicules légers ou véhicules utilitaires, ce dispositif est tel que le débattement est d'une valeur comprise entre 1 à 4 mm inclus, notamment 2 mm.

De préférence, pour une application dans le domaine des véhicules légers ou véhicules utilitaires, ce dispositif est tel que le jeu de montage entre la tige de pivot et le trou débouchant est d'une valeur comprise entre 0,05 et 0,3 mm inclus, notamment de 0,1 mm.

De préférence, pour une application dans le domaine des véhicules légers ou véhicules utilitaires, ce dispositif est tel que le jeu de montage entre la tige de pivot et le trou débouchant est d'une valeur comprise entre 0,1 et 0,3 mm inclus, et tel que le débattement est d'une valeur comprise entre 1 et 4 mm inclus, ce débattement étant par ailleurs d'une valeur égale ou supérieure à 10 fois celle du jeu de montage.

L'espace n'étant débouchant que dans l'extrémité glissante, il subsiste une partie du trou débouchant qui ne présente pas cet espace, et le jeu de montage entre la tige de pivot et cette partie du trou débouchant doit permettre le montage de la tige de pivot dans l'entretoise. Cependant, c'est également cette partie du trou débouchant de l'entretoise, lors de la rupture d'adhérence, qui doit venir en butée sur la tige de pivot. Ce jeu de montage ne doit donc pas être trop grand pour que l'entretoise puisse transmettre la force sur la tige de pivot le plus rapidement possible après la rupture d'adhérence. Ce jeu de montage ne doit pas non plus être trop petit pour permettre le passage de la tige de pivot, ni trop petit pour faciliter le déversement ou le rotulage de l'entretoise. On peut remarquer que si le jeu de montage était un ajustement serré, le déversement de l'entretoise resterait possible par la déformation de la tige de pivot et/ou déformation locale de l'entretoise, mais la répartition de charge des bras serait alors moins influencée par la dissymétrie selon la tige de pivot.

De préférence, ce dispositif est tel que le deuxième support ou l'une des extrémités de l'entretoise présente un bossage ou une ailette de détrompage.

En effet, la dissymétrie de ce dispositif crée une possibilité d'erreur de montage, inversant les deux extrémités avant le serrage de la tige de pivot. Il est alors judicieux de créer un détrompage.

Ce détrompage peut être réalisé sur le deuxième support lorsque l'entretoise est préassemblée avec le deuxième support. Par exemple, une protubérance ou une nervure de raidissement peut être positionnée à proximité de l'extrémité fixe, et être en interférence mécanique avec le bras glissant lorsque le deuxième support est mal monté.

Ce détrompage peut avantageusement être réalisé par une coopération de formes entre l'extrémité fixe et le bras fixe, réalisant une fonction de détrompage et de blocage de l'entretoise sur le bras fixe.

De préférence, ce dispositif est tel que le premier support et la chape et ses deux bras sont réalisés en une pièce.

De façon classique, on peut utiliser un procédé d'usinage, d'emboutissage, de fonderie, ou de plasturgie pour réaliser en une seule pièce le premier support et la chape et ses deux bras. Cette pièce peut être en acier, alliage d'aluminium ou en polymère chargé ou renforcé par des fibres.

De préférence, ce dispositif est tel que la tige de pivot comprend une tête de vis, et une extrémité filetée, l'extrémité filetée formant une liaison encastrement avec le bras fixe

En effet, pour des raisons de facilité de montage, une vis est préférable à un boulon. La vis nécessite que l'un des bras ait un filetage dans un trou borgne ou traversant et formant la liaison encastrement avec la vis, alors que l'autre bras n'a qu'un simple trou traversant lisse pour le passage de la tige de pivot. L'utilisation d'une telle vis comme axe de pivot donne alors deux possibilités de montage : un premier montage consiste à mettre la liaison encastrement sur le bras fixe, un deuxième montage consiste à mettre la liaison encastrement sur le bras glissant.

Le premier montage va provoquer une rupture du bras fixe lors de la rupture de l'adhérence, en ajoutant une contrainte en cisaillement dans le bras fixe.

Le deuxième montage va provoquer une rupture du bras glissant lors de la rupture de l'adhérence, en rajoutant une contrainte en flexion dans le bras glissant.

Le premier montage provoque une rupture du bras instantanée. Cette rupture instantanée présente l'avantage d'être répétable, c'est-à-dire que dans des conditions d'essais identiques, on obtient les mêmes résultats.

De préférence, ce dispositif est tel que l'espace est présent sur au moins 75%, notamment entre 78% et 95% d'une longueur prise entre l'extrémité fixe et l'extrémité glissante suivant l'axe de pivot.

En effet, lors de la rupture d'adhérence, l'entretoise vient en appui seulement sur une partie de la tige de pivot, du coté de l'extrémité fixe. A cet appui, correspond une surface d'appui minimal pour éviter un matage ou un cisaillement de la tige de pivot. A contrario, pour faciliter le déversement, il est préférable que l'espace soit présent sur une longueur minimale entre l'extrémité fixe et l'extrémité glissante suivant la tige de pivot, dite longueur d'entretoise ou largeur de chape. Cette longueur est de 75% de la largeur de chape. En dessous de cette valeur, le jeu de montage ne peut plus être suffisant pour permettre le déversement sans déformation de la tige de pivot ou de l'entretoise.

De préférence, ce dispositif est tel que l'espace est un lamage réalisé dans le trou débouchant de l'entretoise.

En effet, le lamage est la forme la plus simple à obtenir par usinage pour la réalisation de l'espace entièrement dans l'entretoise. Cette forme cylindrique présente également l'avantage d'être symétrique par rapport à l'axe de pivot, permettant d'assurer le débattement quelle que soit l'orientation de la force du deuxième support.

De préférence, ce dispositif est tel que l'espace est délimité par une enveloppe extérieure conique portée par l'entretoise, le cône ayant son axe confondu avec l'axe de pivot, et sa base étant coplanaire avec l'extrémité glissante.

L'espace est réalisé dans l'entretoise, par une forme conique. L'espace dont l'enveloppe correspond à ce cône, est l'espace minimal pour assurer la fonction de déversement de l'entretoise lorsque cet espace est réalisé entièrement dans l'entretoise. En dessous de cet espace minimal, lors de la rupture d'adhérence il est possible que l'entretoise se bloque sur la tige de pivot avant que le débattement complet ne soit atteint. Cette forme permet entre autre, de faciliter un démoulage de l'entretoise, le retrait d'une broche ou d'une matrice d'emboutissage.

De préférence, ce dispositif est tel que le premier support comprend une fixation distante de l'une des deux extrémités, ladite fixation maintenant un organe, et l'extrémité fixe est choisie parmi les deux extrémités comme étant la plus proche de la fixation.

En effet, en faisant ce choix de conception, cela permet en cas de choc, de réduire les contraintes internes de la fixation de l'organe à maintenir, organe qui peut être fragile. La répartition de charge étant modifiée, après la rupture d'adhérence, pour reporter la force de réaction du bras glissant sur le bras fixe, cela revient à dire qu'un point d'application de la force anormale se déplace vers le bras fixe. Il est alors judicieux que ce point d'application soit le plus proche possible de la fixation pour minimiser ses contraintes internes de la fixation en diminuant le bras de levier de la force.

De préférence, ce dispositif est tel que le deuxième support est une biellette de reprise de couple d'un véhicule.

De telles biellettes sont largement répandues dans les dispositifs de suspension des GMP, et intègrent un élément filtrant adhérisé entre l'entretoise et la biellette. Ces dispositifs de suspension des GMP sont également connus pour assurer une rupture programmée d'au moins un de leurs éléments en cas de choc du véhicule contre un obstacle fixe ou mobile.

L'invention a aussi pour objet un procédé de montage du dispositif, le procédé étant tel que le deuxième support exerce une force donnée F sur l'entretoise jusqu'à une intensité seuil correspondant à une limite d'adhérence par frottement de l'extrémité glissante sur lesdits bras, et tel que l'on règle l'intensité seuil en ajustant le serrage de la tige de pivot.

Pour une géométrie donnée des bras et des extrémités et un état de surface donné, c'est-à-dire pour un cône de frottement d'adhérence donné entre les bras et les extrémités, on peut modifier la limite d'adhérence en modifiant le serrage de la tige de pivot. En modifiant la limite d'adhérence, on modifie directement l'intensité seuil de la force qui provoque la rupture des bras. L'ajustement du serrage de l'axe pivot permet de programmer différentes intensités seuil, sans avoir à redimensionner le dispositif.

D'autres caractéristiques, buts et avantages de l'invention apparaîtront à la lecture de la description d'un exemple de réalisation de l'invention non limitatif qui va suivre, faite en référence aux figures 1 à 6 annexées, qui représentent :
- Figure 1 : un pivot de biellette de reprise de couple selon l'invention.
- Figure 2 : une première variante de la figure 1.
- Figure 3 : une deuxième variante de la figure 1.
- Figure 4 : une coupe C-C de la deuxième variante.
- Figure 5 : une coupe A-A de la deuxième variante, traversant l'espace 9.
- Figure 6 : une coupe B-B de la deuxième variante, au niveau de l'extrémité glissante.

Toutes les références s'appliquent d'une figure à l'autre sur les pièces similaires à l'exception des bras 5 et 5', des extrémités de l'entretoise 13 et 14 et des longueurs L1 et L2.

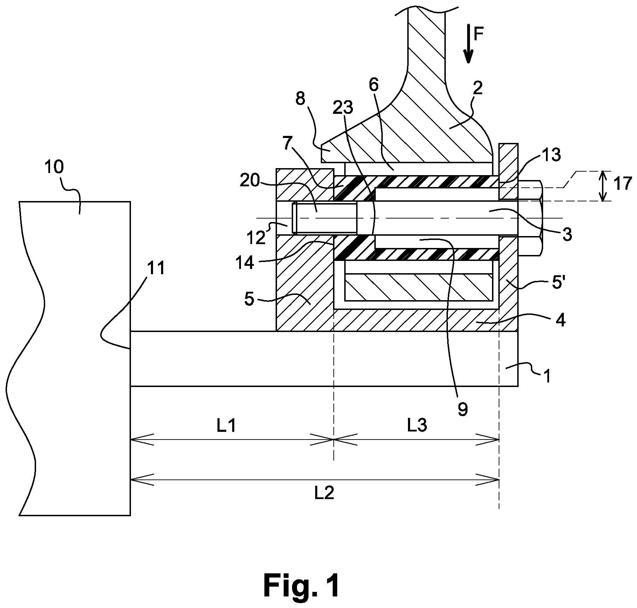

La figure 1 représente une vue en coupe passant par l'axe de pivot, et représente : Le premier support 1, schématiquement représenté comme un bras de support GMP, comprenant une chape 4 avec ses deux bras 5, 5'. Ce premier support 1 est fait en une seule pièce en alliage d'aluminium et par fonderie. Les bras ne sont pas symétriques : le bras fixe 5 est plus épais pour recevoir la partie filetée 20 de la tige de pivot 3, il est également plus court ou présentant une contre-forme au détrompeur 8 pour que ce dernier ne vienne pas en interférence avec le bras fixe 5. La fixation 11 solidarisant le premier support 1 au GMP 10 est une fixation de type encastrement, réalisée par exemple par boulonnage, vis, complémentarité de forme. Cette fixation 11 peut également être réalisée directement par fonderie en intégrant le premier support 1 à une culasse ou un carter du GMP 10. Le deuxième support 2, qui est une biellette de reprise de couple partiellement représentée, dont seule l'extrémité liée au premier support est détaillée, comprend un élément filtrant adhérisé 6 dans l'oeil de la biellette et sur l'entretoise de serrage 7 cylindrique et concentrique à l'oeil. Les deux extrémités de l'entretoise 13, 14 sont planes et orthogonales à l'axe de pivot. L'espace 9 représenté est ici est réalisé par usinage d'un lamage, ce qui donne un espace 9 de forme cylindrique dont le diamètre est plus grand que le trou traversant 12.

Dans le mode de réalisation de la figure 1, l'extrémité fixe 14 est au plus près de la fixation 11. En effet, lorsque l'adhérence entre l'extrémité glissante 13 et le bras glissant 5' se rompt sous l'effet d'un choc (ou force anormale), l'extrémité glissante 13 se déplace dans le sens de la force F vers la tige de pivot 3, grâce au débattement 17 aménagé par l'espace 9. Ce déplacement de l'extrémité glissante 13 engendre un déversement de l'entretoise 7, et un déplacement du point d'application de la force anormale vers le bras fixe 5, changeant ainsi la répartition du chargement des bras 5, 5'. Le point d'application de la force F avant rupture de l'adhérence, c'est-à-dire avant que son intensité dépasse l'intensité seuil, se trouve entre les deux bras 5 et 5' dans la largeur de la chape L3 dite longueur entre l'extrémité fixe 14 et l'extrémité glissante 13. Ce point d'application est notamment centré entre les deux bras 5, 5'. L1 est la distance entre la fixation 11 et l'extrémité glissante 14. L3 est la largeur de la chape entre les deux extrémités, L2 est la distance entre l'extrémité glissante 13 et la fixation 11. Cette force F exerce un couple sur la fixation 11 par l'intermédiaire de son bras de levier égale à L1 + ½ L3 dans le cas d'une force F centrée sur la chape 4 et orthogonale à l'axe de pivot. Lorsque l'intensité de la force F dépasse l'intensité seuil, ce bras de levier diminue, pour devenir au minimum égal à L1. Cette configuration permet de limiter les contraintes de flexion transmises à la fixation 11, ce qui peut être avantageux dans le cas où la fixation 11 est réalisée sur une culasse de GMP . Lors du procédé de montage de la tige de pivot 3 qui est une vis dans ce mode de réalisation, l'ajustement du couple de serrage appliqué sur la partie filetée 20 de la tige de pivot 3 permet d'ajuster le serrage de l'entretoise 7 entre les deux bras 5 et 5', modifiant ainsi la limite d'adhérence entre les extrémités 13 et 14 et les deux bras 5 et 5'. Plus le couple de serrage est important, plus la limite d'adhérence a une valeur élevée, et plus l'intensité seuil de la force F sera élevée. Il est connu d'utiliser des visseuses dont le couple de serrage est programmé. De telles visseuses permettent alors de programmer différentes intensités seuil de la force F sans devoir modifier les pièces de la liaison pivot.

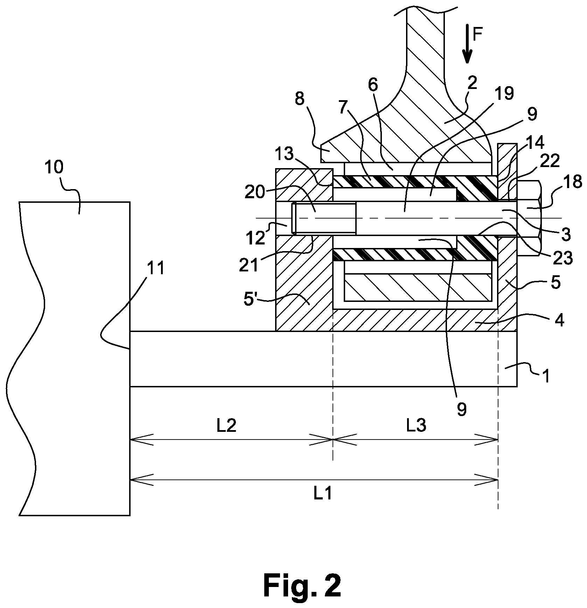

La figure 2 représente le même dispositif, mais dans une variante avec l'extrémité fixe 14 la plus éloignée de la fixation 11. Cette disposition provoque l'augmentation du bras de levier de la force anormale, en déplaçant le point d'application de la force anormale vers le bras fixe 5 créant ainsi un bras de levier qui tend vers une longueur égale à L1. Le bras fixe 5 est également le bras qui préférentiellement se déforme le plus par rapport au bras glissant 5' sous la contrainte de la force anormale, du fait de sa position plus éloignée de la fixation 11. Lors de la rupture d'adhérence, l'entretoise 7 s'appuie à proximité de la tête de vis 18. Par l'intermédiaire de la partie filetée 20 et de la partie lisse 19 de la tige de pivot, l'entretoise 7 rajoute une contrainte de flexion dans le bras glissant 5' qui se rompt avant le bras fixe 5. Cette figure montre également la dissymétrie selon le plan médian de la chape 4 et sa répartition sur la largeur de la chape L3, ici l'espace cylindrique 9 étant aménagé sur 75% de la largeur de la chape L3.

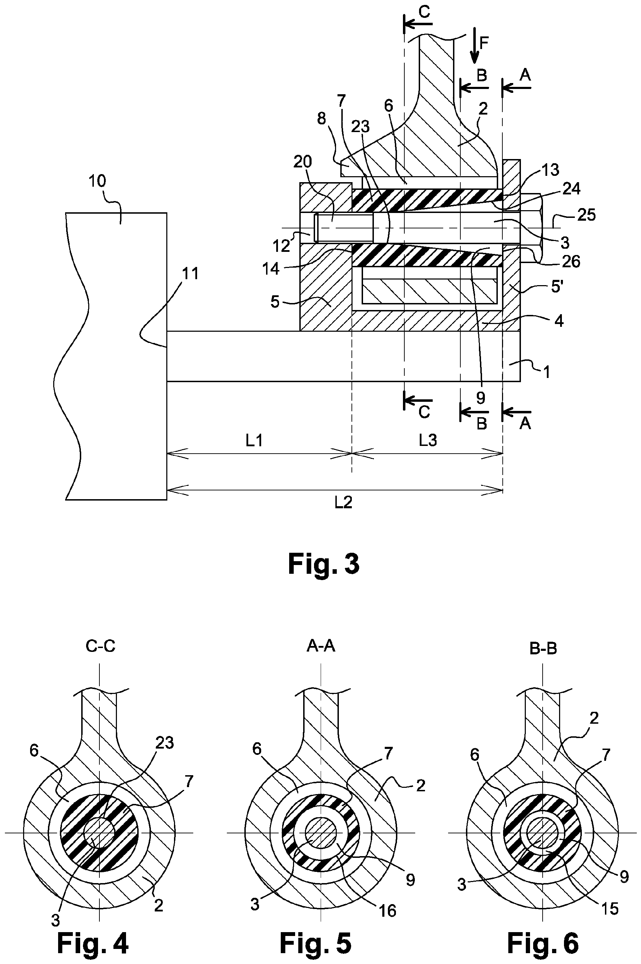

La figure 3 représente une variante avec l'espace 9 aménagé dans l'enveloppe extérieure conique 24 portée par l'entretoise 7, avec sa base 26 confondue avec l'extrémité glissante 5'. On note là aussi la dissymétrie selon le plan médian de la chape 4, la coupe C-C étant au début de l'espace 9 dans le sens du bras fixe 5 vers le bras glissant 5', la coupe B-B étant dans l'espace 9, et la coupe A-A étant à la fin de l'espace 9, c'est-à-dire confondue avec l'extrémité glissante.

La figure 4 représente le jeu de montage 23. Ce jeu de montage 23 est constant du plan de coupe C-C à l'extrémité fixe 14.

La figure 5 illustre la section maximale 16 de l'espace 9, section se trouvant confondue avec l'extrémité glissante 13.

La figure 6 illustre la section 15 constante ou continument croissante.

Ces modes de réalisation permettent de standardiser la liaison pivot en offrant une possibilité de réglage de l'intensité seuil de la force F déclenchant la rupture de la liaison pivot, ce réglage étant obtenu par l'ajustement du serrage de la tige de pivot 3 lors du procédé de montage. En outre, on a pu constater l'efficacité de tous ces modes de réalisation, l'objectif de rupture programmée étant atteint dans tous les cas.

## Revendications

1. Dispositif de pivot comprenant :
- un premier support solidaire (1) d'une chape (4), ladite chape (4) comprenant un bras dit fixe (5) et un bras dit glissant (5')
- un deuxième support (2) articulé autour d'une entretoise de serrage (7), ladite entretoise (7) présentant un trou débouchant (12) entre une extrémité glissante (13) en vis-à-vis du bras glissant (5') et une extrémité fixe (14) en vis-à-vis du bras fixe (5) de ladite entretoise (7).
- une tige de pivot (3) traversant lesdits bras (5, 5'), et ladite entretoise de serrage (7) par ledit trou (12) avec notamment un jeu de montage (23), et venant serrer l'entretoise (7) entre lesdits bras (5, 5') et lesdites extrémités (13,14).
ledit dispositif étant **caractérisé en ce qu'**un espace (9) est aménagé entre ladite tige de pivot (3) et ladite entretoise de serrage (7), ledit espace (9) débouchant uniquement dans ladite extrémité glissante (13).

2. Dispositif selon la revendication précédente, **caractérisé en ce que** ledit deuxième support (2) exerce une force donnée (F) sur ladite entretoise (7), et **en ce que** ledit espace (9) est d'une section (15) constante ou continument croissante pour atteindre une section maximale (16) dans le plan de ladite extrémité glissante (13) et **en ce que** la forme de ladite section maximale (16) préserve un débattement (17) entre ladite extrémité glissante (13) et ladite tige de pivot (3), dans le sens de ladite force (F), ledit débattement (17) étant d'une valeur égale ou supérieure à 10 fois celle dudit jeu de montage (23), notamment 20 fois ledit jeu de montage (23) .

3. Dispositif selon l'une des revendications précédentes, **caractérisé en ce que** le deuxième support (2) ou l'une desdites extrémités de l'entretoise (13,14) présente un bossage ou une ailette de détrompage (8).

4. Dispositif selon l'une des revendications précédentes, **caractérisé en ce que** ledit premier support (1) et ladite chape (4) et ses deux bras (5, 5') sont réalisés en une pièce.

5. Dispositif selon l'une des revendications précédentes, **caractérisé en ce que** ladite tige de pivot (3) comprend une tête de vis (18), et une extrémité filetée (20), **en ce que** ladite extrémité filetée (20) forme une liaison encastrement (21) avec ledit bras fixe (5).

6. Dispositif selon l'une des revendications précédentes, **caractérisé en ce que** ledit espace (9) est présent sur au moins 75%, notamment entre 78% et 95% d'une longueur (L3) prise entre ladite extrémité fixe (14) et ladite extrémité glissante (13) suivant l'axe de pivot.

7. Dispositif selon l'une des revendications précédentes, **caractérisé en ce que** ledit espace (9) est un lamage réalisé dans ledit trou débouchant (12) de ladite entretoise (7).

8. Dispositif selon l'une des revendications de 1 à 6, **caractérisé en ce que** ledit espace est délimité par une enveloppe extérieure conique (24) portée par ladite entretoise (7), ledit cône (24) ayant son axe (25) confondu avec l'axe de pivot, et sa base (26) étant coplanaire avec ladite extrémité glissante (13).

9. Dispositif selon l'une des revendications précédentes, **caractérisé en ce que** ledit deuxième support (2) est une biellette de reprise de couple d'un véhicule.

10. Procédé de montage du dispositif selon l'une des revendications précédentes, **caractérisé en ce que** ledit deuxième support (2) exerce une force donnée (F) sur ladite entretoise (7) jusqu'à une intensité seuil correspondant à une limite d'adhérence par frottement de ladite extrémité glissante (13) sur ledit bras glissant (5'), et **en ce que** l'on règle ladite intensité seuil en ajustant ledit serrage de ladite tige de pivot (3).

## Patentansprüche

1. Schwenkbare Vorrichtung, die Folgendes umfasst:
- einen ersten Träger (1), der mit einem Gabelbügel (4) fest verbunden ist, wobei der Gabelbügel (4) einen stationär genannten Arm (5) und einen gleitend genannten Arm (5') umfasst,
- einen zweiten Träger (2), der um einen Spannabstandhalter (7) angelenkt ist, wobei der Abstandhalter (7) eine durchgehende Bohrung (12) zwischen einem gleitenden Ende (13) gegenüber dem gleitenden Arm (5') und einem stationären Ende (14) gegenüber dem stationären Arm (5) des Abstandhalters (7) aufweist,
- einen Schwenkschaft (3), der die Arme (5, 5') und den Spannabstandhalter (7) durch die Bohrung (12) insbesondere mit einem Montagespiel (23) durchquert und den Abstandhalter (7) zwischen den Armen (5, 5') und den Enden (13, 14) spannt,
Vorrichtung **dadurch gekennzeichnet, dass** ein Raum (9) zwischen dem Schwenkschaft (3) und dem Spannabstandhalter (7) eingerichtet ist, wobei der Raum (9) nur in das gleitende Ende (13) mündet.

2. Vorrichtung nach dem vorstehenden Anspruch, **dadurch gekennzeichnet, dass** der zweite Träger (2) eine gegebene Kraft (F) auf den Abstandhalter (7) ausübt, und dass der Raum (9) einen Querschnitt (15) aufweist, der konstant oder laufend zunehmend ist, um einen maximalen Querschnitt (16) in der Ebene des gleitenden Endes (13) zu erreichen, und dass die Form des maximalen Querschnitts (16) ein Ausfedern (17) zwischen dem gleitenden Ende (13) und dem Schwenkschaft (3) in die Richtung der Kraft (F) wahrt, wobei das Ausfedern (17) einen Wert gleich oder größer als 10 Mal den des Montagespiels (23), insbesondere 20 Mal des Montagespiels (23) aufweist.

3. Vorrichtung nach einem der vorstehenden Ansprüche, **dadurch gekennzeichnet, dass** der zweite Träger (2) oder eines der Enden des Abstandhalters (13, 14) einen Höcker oder eine Unverwechselbarkeitsrippe (8) aufweist.

4. Vorrichtung nach einem der vorstehenden Ansprüche, **dadurch gekennzeichnet, dass** der erste Träger (1) und der Gabelbügel (4) sowie seine zwei Arme (5, 5') aus einem Stück hergestellt sind.

5. Vorrichtung nach einem der vorstehenden Ansprüche, **dadurch gekennzeichnet, dass** der Schwenkschaft (3) einen Schraubenkopf (18) und ein Gewindeende (20) umfasst, dass das Gewindeende (20) eine Verschachtelungsverbindung (21) mit dem stationären Arm (5) bildet.

6. Vorrichtung nach einem der vorstehenden Ansprüche, **dadurch gekennzeichnet, dass** der Raum (9) auf mindestens 75 %, insbesondere zwischen 78 % und 95 % einer Länge (L3), die zwischen dem stationären Ende (14) und dem gleitenden Ende (13) entlang der Schwenkachse genommen wird, anwesend ist.

7. Vorrichtung nach einem der vorstehenden Ansprüche, **dadurch gekennzeichnet, dass** der Raum (9) eine Senkung ist, die in der durchgehenden Bohrung (12) des Abstandhalters (7) hergestellt ist.

8. Vorrichtung nach einem der Ansprüche 1 bis 6, **dadurch gekennzeichnet, dass** der Raum durch einen äußeren konischen Mantel (24) abgegrenzt ist, der von dem Abstandhalter (7) getragen wird, wobei die Achse (25) des Kegels (24) mit der Schwenkachse zusammenfällt, und seine Basis (26) mit dem gleitenden Ende (13) koplanar ist.

9. Vorrichtung nach einem der vorstehenden Ansprüche, **dadurch gekennzeichnet, dass** der zweite Träger (2) ein Momentaufnahmeschwingarm eines Fahrzeugs ist.

10. Montageverfahren der Vorrichtung nach einem der vorstehenden Ansprüche, **dadurch gekennzeichnet, dass** der zweite Träger (2) eine gegebene Kraft (F) auf den Abstandhalter (7) bis zu einer Schwellenstärke ausübt, die einem Haftungslimit durch Reibung des gleitenden Endes (13) auf dem gleitenden Arm (5') entspricht, und dass die Schwellenstärke durch Einstellen des Spannens des Schwenkschafts (3) eingestellt wird.

## Claims

1. A pivot device including:
- a first mounting (1) secured to a yoke (4), said yoke (4) including an arm designated as stationary (5) and an arm designated as sliding (5')
- a second mounting (2) articulated about a clamping spacer (7), said spacer (7) having a through hole (12) between a sliding end (13) opposite the sliding arm (5') and a stationary end (14) opposite the stationary arm (5) of said spacer (7)
- a pivot rod (3) passing through said arms (5, 5'), and said clamping spacer (7) via said hole (12) with in particular an assembly clearance (23), and clamping the spacer (7) between said arms (5, 5') and said ends (13, 14)
said device being **characterized in that** a space (9) is arranged between said pivot rod (3) and said clamping spacer (7), said space (9) opening solely into said sliding end (13).

2. The device according to the preceding claim, **characterized in that** said second mounting (2) exerts a given force (F) on said spacer (7), and **in that** said space (9) has a constant or continuously increasing section (15) to reach a maximum section (16) in the plane of said sliding end (13) and **in that** the shape of said maximum section (16) maintains a displacement (17) between said sliding end (13) and said pivot rod (3), in the direction of said force (F), said displacement (17) being of a value equal to or greater than 10 times that of said assembly clearance (23), in particular 20 times said assembly clearance (23).

3. The device according to one of the preceding claims, **characterized in that** the second mounting (2) or one of said ends of the spacer (13, 14) has a boss or a keying fin (8).

4. The device according to one of the preceding claims, **characterized in that** said first mounting (1) and said yoke (4) and its arms (5, 5') are made in one piece.

5. The device according to one of the preceding claims, **characterized in that** said pivot rod (3) includes a screw head (18) and a threaded end (20), **in that** said threaded end (20) forms a fitting connection (21) with said stationary arm (5).

6. The device according to one of the preceding claims, **characterized in that** said space (9) is present over at least 75 %, in particular between 78 % and 95 % of a length (L3) taken between said stationary end (14) and said sliding end (13) along the pivot axis.

7. The device according to one of the preceding claims, **characterized in that** said space (9) is a counterbore formed in said through hole (12) of said spacer (7).

8. The device according to one of Claims 1 to 6, **characterized in that** said space is delimited by a conical exterior envelope (24) carried by said spacer (7), said cone (24) having its axis (25) coinciding with the pivot axis, and its base (26) being coplanar with said sliding end (13).

9. The device according to one of the preceding claims, **characterized in that** said second mounting (2) is a connecting torque rod of a vehicle.

10. A method for mounting the device according to one of the preceding claims, **characterized in that** said second mounting (2) exerts a given force (F) on said spacer (7) up to a threshold intensity corresponding to a limit of adhesion by friction of said sliding end (13) on said sliding arm (5'), and **in that** said threshold intensity is regulated by adjusting said clamping of said pivot rod (3).
